# EUROPEAN PATENT SPECIFICATION

(11) **EP 2 505 937 B1**
(45) Date of publication and mention of the grant of the patent: **08.06.2016**
(21) Application number: 12160644.6
(22) Date of filing: 21.03.2012
(51) Int. Cl.: F24J 3/08

(54) **Pipe member equipped with heat insulation core pipeline and u-shaped annularly-distributed pipeline**
Leitungselement mit Wärmeisolierungskernleitung und U-förmige ringförmig verteilte Leitung
Élément de conduite équipé d'une canalisation à noyau d'isolation thermique et d'une canalisation en forme de U et distribuée en anneau

(30) Priority: 22.03.2011 US 201113053398
(43) Date of publication of application: 03.10.2012
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- JP-A- 2007 315 742
- JP-A- 2009 092 350

## Description

### BACKGROUND OF THE INVENTION

### (a) Field of the Invention

The present invention relates to a pipe member equipped with heat insulation core pipeline and U-shaped annularly-distributed pipeline for being installed within the thermal storage body (500) composed of natural thermal storage body, such as shallow surface of the earth, or pool, lake, river, ocean, or artificial objects in solid, or gaseous, or liquid state; wherein the pipe member equipped with heat insulation core pipeline and U-shaped annularly-distributed pipeline is constructed through that the piping segments of fluid inlet terminal and/or outlet terminal of the U-type core piping and loop piping has thermal insulating structure installed between the inlet terminal and the outlet terminal; so as to prevent thermal energy loss because of thermal conduction between adjacent piping segments of inlet terminal and outlet terminal on the same side when thermal conductive fluid with temperature difference passing through.

### (b) Description of the Prior Art

JP 2009 92350, which can be considered as the closest prior art, discloses in figures 1 and 4 a thermal conductive cylindrical body 25 for being installed underground having a multiple-route spiral piping structure with two or more routes installed within the thermal conductive cylindrical body and having a central piping segment concentrated adjacent the axis of the thermal conductive cylindrical body, the central piping segment being made of thermal insulated material.

Traditionally, thermal energy loss often occurs in U-type piping device of U-type piping heat exchanger, because of thermal conduction by temperature difference between adjacent piping segments of fluid inlet terminal and fluid outlet terminal installed on the same side when fluid with temperature difference passing through.

### SUMMARY OF THE INVENTION

The present invention relates to a U-type pipeline capable of thermal energy transmission with each other in a radiate arrangement, wherein the piping segments of the U-type fluid piping inlet end and/or outlet end of the U-type piping capable of thermal energy transmission with each other in the radiate arrangement have a thermal insulating structure installed between the inlet end and the outlet end; and the above piping system is installed within the thermal conductive body made of thermal conductive material; so as to prevent thermal energy loss because of thermal conduction by temperature difference between adjacent piping segments with temperature difference of the inlet end and the outlet end installed on the same side when fluid with temperature difference passing through.

According to one embodiment, the central piping segment includes more than one pipe, each of which is connected to one of the spiral pipe segments.

According to an embodiment of the inventions there is provided a pipe member for use in a natural thermal storage body comprising a columnar thermal conductive body; multiple-route U-type spiral piping: constituted by a U-type spiral piping structure having two or more routes installed within the columnar thermal conductive body, the U-type spiral piping structure allows a thermal conductive fluid to pass through the columnar thermal conductive body which is composed of solid state or colloidal object; the U-type spiral piping structure is spirally and annularly installed near the peripheral edge of the columnar thermal conductive body, wherein the first fluid inlet and outlet terminal of the U-type spiral piping structure of each route is installed at the top of the spiral piping structure center, and is connected with the bottom of the U-type spiral piping structure of each route through the central piping segment of U-type spiral piping of each route, and the bottom of the U-type spiral piping structure is concentrated toward the center of the columnar thermal conductive body, and the second inlet and outlet terminal of each route is installed at the top end of the U-type spiral piping structure spirally via the piping segment of the second fluid inlet and outlet terminal of the U-type spiral piping structure of each route; and a thermal insulating device: the central piping segments of U-type spiral piping of each route is installed adjacent to the axial center, and the periphery of the concentrated central piping segments of U-type spiral piping of each route is installed within a thermal insulating device, so that the thermal energy loss caused by thermal conduction between the concentrated central piping segments of U-type spiral piping and the U-type spiral piping structure and the piping segment is substantially reduced.

### BRIEF DESCRIPTION OF THE DRAWINGS

FIG 1 shows an embodiment of conventional U-type piping (100) installed within the thermal storage body (500);
FIG 2 shows an embodiment of conventional U-type piping (100) installed within the columnar thermal conductive body (300), wherein the columnar thermal conductive body (300) is placed within the thermal storage body (500);

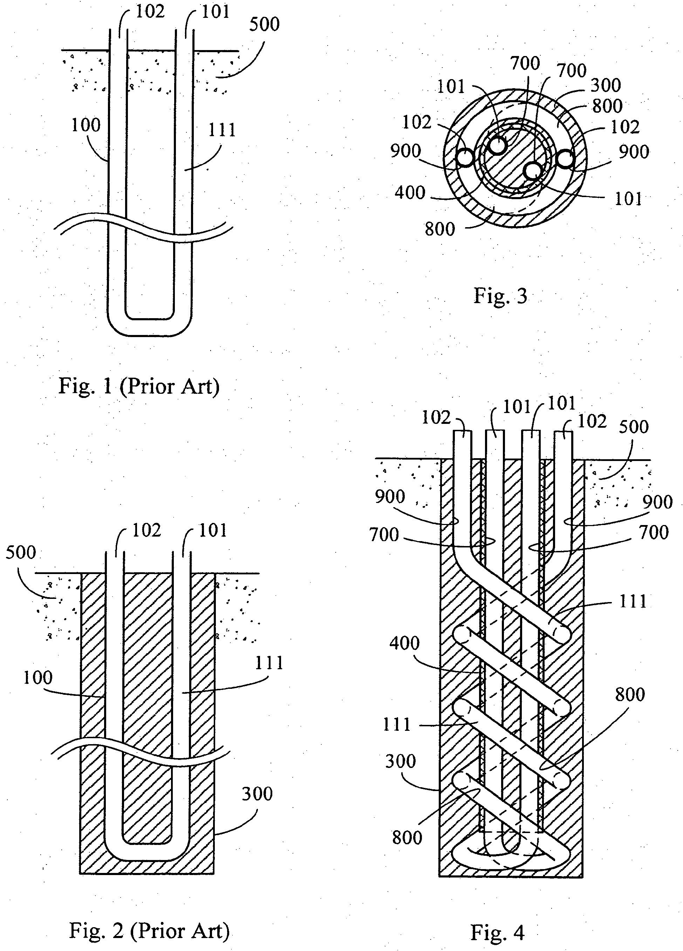

FIG. 3 is a schematic structural view showing that the multiple-route U-type spiral piping structure (800) having two or more than two routes is installed within the columnar thermal conductive body (300), and spirally installed at the periphery of the columnar thermal conductive body (300), and the bottom is concentrated toward the center and connected to the first fluid inlet and outlet terminal (101) through the central piping segment of U-type spiral piping (700), and the outer periphery of the central piping segment of U-type spiral piping (700) of the multiple routes concentrated at the center is installed with the thermal insulating device (400), according to the present invention.
FIG. 4 is a section view of FIG 3.

### DESCRIPTION OF MAIN COMPONENT SYMBOLS

- 100 :: U-type piping
- 101 :: First fluid inlet and outlet terminal
- 102 :: Second fluid inlet and outlet terminal
- 111 :: Thermal conductive fluid
- 300 :: Columnar thermal conductive body
- 400 :: Thermal insulating device
- 500 :: Thermal storage body
- 700 :: Central piping segment of U-type spiral piping
- 800 :: U-type spiral piping structure
- 900 :: Piping segment of the second fluid inlet and outlet terminal (102) of the U-type spiral piping structure (800)

### DETAILED DESCRIPTION OF THE PREFERED EMBODIMENTS

A pipe member equipped with heat insulation core pipeline and U-shaped annularly-distributed pipeline, which is installed within the thermal storage body (500) composed of natural thermal storage body, such as shallow surface of the earth, or pool, lake, river, ocean, or artificial objects in solid, or gaseous, or liquid state is described. The pipe member is equipped with heat insulation core pipeline and U-shaped annularly-distributed pipeline is constructed through that the piping segments of fluid inlet terminal and/or outlet terminal of the U-type core piping and loop piping has thermal insulating structure installed between the inlet terminal and the outlet terminal; so as to prevent thermal energy loss because of thermal conduction between adjacent piping segments of inlet terminal and outlet terminal on the same side when thermal conductive fluid with temperature difference passing through; wherein the multiple-route U-type spiral piping structure (800) having two or more than two routes is installed within the columnar thermal conductive body (300), and spirally installed at the periphery of the columnar thermal conductive body (300), and the bottom is concentrated toward the center and connected to the first fluid inlet and outlet terminal (101) through the central piping segment of U-type spiral piping (700), and the outer periphery of the central piping segment of U-type spiral piping (700) of the multiple routes concentrated at the center is installed with the thermal insulating device (400), which mainly consist of:
- Multiple-route U-type spiral piping: constituted by a U-type spiral piping structure (800) having two or more than two routes and allowing the thermal conductive fluid (111) to pass through, or by multiple sets of the U-type spiral piping structures (800) installed in the columnar thermal conductive body (300) composed of solid state or colloidal object; the U-type spiral piping structure (800) in multiple-route is spirally and annularly installed near the peripheral edge of the columnar thermal conductive body (300), wherein the first fluid inlet and outlet terminal (101) of the U-type spiral piping structure (800) of each route is installed at the top of the spiral piping structure center, and is communicated with the bottom of the U-type spiral piping structure (800) of each route through the central piping segment of U-type spiral piping (700) of each route, and the second inlet and outlet terminal (102) of each route is installed at the top end of the U-type spiral piping structure (800) spirally up its own run via the piping segment (900) of the second fluid inlet and outlet terminal (102) of the U-type spiral piping structure (800) of each route;
- Thernnal insulating device (400): related to a thermal insulating structure constituted by the followings with thermal insulating effects, such as solid, flexible body, or foam, or enveloped colloid, gas, or liquid, or vacuum structure; the U-type spiral piping structure (800) having two or more than two routes is installed in the columnar thermal conductive body (300), and the central piping segments of U-type spiral piping (700) of the multiple routes are concentrated in the columnar thermal conductive body (300) for upwardly connecting to the first fluid inlet and outlet terminal (101); the periphery of the concentrated central piping segments of U-type spiral piping (700) of the multiple routes is installed with the thermal insulating structure (400), by way of the mentioned thermal insulating structure (400), the thermal energy loss caused by thermal conduction between the concentrated central piping segments of U-type spiral piping (700) of the multiple routes, and the U-type spiral piping structure (800) of each route, and the piping segment (900) of the second fluid inlet and outlet terminal (102) of the U-type spiral piping structure (800) of each route is substantially reduced;

The structure includes one or more than one of the following structural states:
1) Piping structure assembly: which is provided with the multiple-route U-type spiral piping composed of the U-type spiral piping structure (800) having two or more than two routes and the piping segment (900) of the second fluid inlet and outlet terminal (102) of the U-type spiral piping structure (800), and the central piping segment of U-type spiral piping (700) of each route is concentrated adjacent installed at the axial center, and the thermal insulating device (400) is installed at the periphery of the central piping segment of U-type spiral piping (700), so as to configure the piping structure assembly;
2) Columnar structure enveloped by the columnar thermal conductive body (300): which is provided with the columnar thermal conductive body (300) made of the thermal conductive material in various geometric cross section shapes such as round, oval, square, rectangular, or star-like shapes, for being served to envelope the U-type spiral piping structure (800) having two more or than two routes and the piping segment (900) of the second fluid inlet and outlet terminal (102) of the U-type spiral piping structure (800), and to envelope the thermal insulating device (400) installed at the periphery of the central piping segments of U-type spiral piping (700) concentrated adjacent installed at the axial center, so as to configure the columnar structure enveloped by the columnar thermal conductive body (300); the periphery of individual central piping segment of U-type spiral piping (700) of the multiple routes concentrated adjacent installed at the axial center is respectively installed with the thermal insulating device (400);
3) Columnar structure utilizing the columnar thermal conductive body (300) having piping therein as the structure member: which is directly made of the columnar thermal conductive body (300), and configured in the structural state having piping therein for being installed with the multiple-route spiral piping composed of the U-type spiral piping structure (800) having two or more than two routes, including the piping segment (900) of the second fluid inlet and outlet terminal (102) of the U-type spiral piping structure (800), the central piping segments of U-type spiral piping (700) of each route which connects to the first fluid inlet and outlet terminal (101) being concentrated adjacent installed at the axial center, and the thermal insulating device (400) installed at the periphery of the central piping segment of U-type spiral piping (700), so as to configure the columnar structure utilizing the columnar thermal conductive body (300) having piping therein as the structure member.

The present invention relates to a pipe member equipped with heat insulation core pipeline and U-shaped annularly-distributed pipeline for being installed within the thermal storage body (500) composed of natural thermal storage body, such as shallow surface of the earth, or pool, lake, river, ocean, or artificial objects in solid, or gaseous, or liquid state; wherein the pipe member equipped with heat insulation core pipeline and U-shaped annularly-distributed pipeline is constructed through that the piping segments of fluid inlet terminal and/or outlet terminal of the U-type core piping and loop piping has thermal insulating structure installed between the inlet terminal and the outlet terminal; so as to prevent thermal energy loss because of thermal conduction between adjacent piping segments of inlet terminal and outlet terminal on the same side when thermal conductive fluid with temperature difference passing through.

As for the pipe member equipped with heat insulation core pipeline and U-shaped annularly-distributed pipeline of the present invention, each of the U-type piping (100) is used for passing through one or more following thermal conductive fluid (111), including for passing through:
1) liquid state fluid;
2) gaseous state fluid;
3) liquid to gaseous state fluid; and
4) gaseous to liquid state fluid.

Traditionally, thermal energy loss often occurs in U-type piping device of U-type piping heat exchanger, because of thermal conduction by temperature difference between adjacent piping segments of fluid inlet terminal and fluid outlet terminal installed on the same side when fluid with temperature difference passing through, which is illustrated by examples as followings:
FIG 1 shows an embodiment of conventional U-type piping (100) installed within the thermal storage body (500); when the thermal conductive fluid (111) passing through the piping segment of the first fluid inlet and outlet terminal (101) and the adjacent piping segment of the second fluid inlet and outlet terminal (102) respectively installed on the same side of the U-type piping (100) are in temperature difference, the two piping segments will produce thermal conduction and therefore result in thermal energy loss.
FIG. 2 shows an embodiment of conventional U-type piping (100) installed within the columnar thermal conductive body (300), wherein the columnar thermal conductive body (300) is placed within the thermal storage body (500).

When the columnar thermal conductive body (300) is installed at the pipe member equipped with heat insulation core pipeline and U-shaped annularly-distributed pipeline of the thermal storage body (500) composed of natural thermal storage body, such as shallow surface of the earth, or pool, lake, river, ocean, etc, or artificial objects in solid, or gaseous, or liquid state, and the thermal conductive fluid (111) with temperature difference passes through the first fluid inlet and outlet terminal (101) and the second fluid inlet and outlet terminal (102) of the U-type piping, there will be thermal energy loss, because of thermal conduction between adjacent piping segments of the first fluid inlet and outlet terminal (101) and the second fluid inlet and outlet terminal (102) installed on the same side;

The present invention relates to a pipe member equipped with heat insulation core pipeline and U-shaped annularly-distributed pipeline for being installed within the thermal storage body (500) composed of natural thermal storage body, such as shallow surface of the earth, or pool, lake, river, ocean, etc, or artificial objects in solid, or gaseous, or liquid state; wherein the pipe member equipped with heat insulation core pipeline and U-shaped annularly-distributed pipeline is constructed through that the piping segments of the U-type fluid piping inlet terminal and/or outlet terminal, which are radial U-type pipelines for passing thermal energy through each other have thermal insulating structure installed between the inlet terminal and the outlet terminal; so as to prevent thermal energy loss because of thermal conduction between adjacent piping segments of inlet terminal and outlet terminal on the same side when thermal conductive fluid with temperature difference passing through.

FIG. 3 is a schematic structural view showing that the multiple-route U-type spiral piping structure (800) having two or more than two routes is installed within the columnar thermal conductive body (300), and spirally installed at the periphery of the columnar thermal conductive body (300), and the bottom is concentrated toward the center and connected to the first fluid inlet and outlet terminal (101) through the central piping segment of U-type spiral piping (700), and the outer periphery of the central piping segment of U-type spiral piping (700) of the multiple routes concentrated at the center is installed with the thermal insulating device (400), according to the present invention.

FIG. 4 is a section view of FIG. 3
As shown in FIG. 3 and FIG. 4, it mainly consists of:
--Multiple-route U-type spiral piping: constituted by a U-type spiral piping structure (800) having two or more than two routes and allowing the thermal conductive fluid (111) to pass through, or by multiple sets of the U-type spiral piping structures (800) installed in the columnar thermal conductive body (300) composed of solid state or colloidal object; the U-type spiral piping structure (800) in multiple-route is spirally and annularly installed near the peripheral edge of the columnar thermal conductive body (300), wherein the first fluid inlet and outlet terminal (101) of the U-type spiral piping structure (800) of each route is installed at the top of the spiral piping structure center, and is communicated with the bottom of the U-type spiral piping structure (800) of each route through the central piping segment of U-type spiral piping (700) of each route, and the second inlet and outlet terminal (102) of each route is installed at the top end of the U-type spiral piping structure (800) spirally up its own run via the piping segment (900) of the second fluid inlet and outlet terminal (102) of the U-type spiral piping structure (800) of each route;
--Thermal insulating device (400): related to a thermal insulating structure constituted by the followings with thermal insulating effects, such as solid, flexible body, or foam, or enveloped colloid, gas, or liquid, or vacuum structure; the U-type spiral piping structure (800) having two or more than two routes is installed in the columnar thermal conductive body (300), and the central piping segments of U-type spiral piping (700) of the multiple routes are concentrated in the columnar thermal conductive body (300) for upwardly connecting to the first fluid inlet and outlet terminal (101); the periphery of the concentrated central piping segments of U-type spiral piping (700) of the multiple routes is installed with the thermal insulating structure (400), by way of the mentioned thermal insulating structure (400), the thermal energy loss caused by thermal conduction between the concentrated central piping segments of U-type spiral piping (700) of the multiple routes, and the U-type spiral piping structure (800) of each route, and the piping segment (900) of the second fluid inlet and outlet terminal (102) of the U-type spiral piping structure (800) of each route is substantially reduced;

The structure includes one or more than one of the following structural states:
1) Piping structure assembly: which is provided with the multiple-route U-type spiral piping composed of the U-type spiral piping structure (800) having two or more than two routes and the piping segment (900) of the second fluid inlet and outlet terminal (102) of the U-type spiral piping structure (800), and the central piping segment of U-type spiral piping (700) of each route is concentrated adjacent installed at the axial center, and the thermal insulating device (400) is installed at the periphery of the central piping segment of U-type spiral piping (700), so as to configure the piping structure assembly;
2) Columnar structure enveloped by the columnar thermal conductive body (300): which is provided with the columnar thermal conductive body (300) made of the thermal conductive material in various geometric cross section shapes such as round, oval, square, rectangular, or star-like shapes, for being served to envelope the U-type spiral piping structure (800) having two more or than two routes and the piping segment (900) of the second fluid inlet and outlet terminal (102) of the U-type spiral piping structure (800), and to envelope the thermal insulating device (400) installed at the periphery of the central piping segments of U-type spiral piping (700) concentrated adjacent installed at the axial center, so as to configure the columnar structure enveloped by the columnar thermal conductive body (300) (as shown in FIG. 3 and FIG. 4); or the periphery of individual central piping segment of U-type spiral piping (700) of the multiple routes concentrated adjacent installed at the axial center is respectively installed with the thermal insulating device (400);
3) Columnar structure utilizing the columnar thermal conductive body (300) having piping therein as the structure member: which is directly made of the columnar thermal conductive body (300), and configured in the structural state having piping therein for being installed with the multiple-route spiral piping composed of the U-type spiral piping structure (800) having two or more than two routes, including the piping segment (900) of the second fluid inlet and outlet terminal (102) of the U-type spiral piping structure (800), the central piping segments of U-type spiral piping (700) of each route which connects to the first fluid inlet and outlet terminal (101) being concentrated adjacent installed at the axial center, and the thermal insulating device (400) installed at the periphery of the central piping segment of U-type spiral piping (700), so as to configure the columnar structure utilizing the columnar thermal conductive body (300) having piping therein as the structure member.

## Claims

1. A pipe member for use in a natural thermal storage body comprising:
-- A columnar thermal conductive body (300);
--Multiple-route U-type spiral piping: constituted by a U-type spiral piping structure (800) having two or more routes installed within the columnar thermal conductive body (300), the U-type spiral piping structure (800) allows a thermal conductive fluid (111) to pass through the columnar thermal conductive body (300) which is composed of solid state or colloidal object; the U-type spiral piping structure (800) is spirally and annularly installed near the peripheral edge of the columnar thermal conductive body (300), wherein the first fluid inlet and outlet terminal (101) of the U-type spiral piping structure (800) of each route is installed at the top of the spiral piping structure center, and is connected with the bottom of the U-type spiral piping structure (800) of each route through the central piping segment of U-type spiral piping (700) of each route, and the bottom of the U-type spiral piping structure (800) is concentrated toward the center of the columnar thermal conductive body (300), and the second inlet and outlet terminal (102) of each route is installed at the top end of the U-type spiral piping structure (800) spirally via the piping segment (900) of the second fluid inlet and outlet terminal (102) of the U-type spiral piping structure (800) of each route; and the central piping segments of the U-type spiral piping (700) of each route being concentrated in the columnar thermal conductive body (300)
--Thermal insulating device (400): the periphery of the concentrated central piping segments of the U-type spiral piping (700) is installed within the thermal insulating device (400), so that the thermal energy loss caused by thermal conduction between the concentrated central piping segments of U-type spiral piping (700) and the piping segment (900) is substantially reduced.

## Patentansprüche

1. Leitungselement zur Verwendung in einem natürlichen Wärmespeicherkörper, umfassend:
-- einen säulenförmigen wärmeleitfähigen Körper (300);
-- U-förmige spiralförmige Rohrleitung mit mehreren Leitungen: umfassend eine U-förmige spiralförmige Rohrleitungsstruktur (800) mit zwei oder mehr Leitungen, die innerhalb des säulenförmigen wärmeleitfähigen Körpers (300) installiert ist, wobei es die U-förmige spiralförmige Rohrleitungsstruktur (800) einem wärmeleitfähigen Fluid (111) gestattet, den säulenförmigen wärmeleitfähigen Körper (300) zu durchströmen, der aus einem festen oder kolloidalen Objekt besteht; wobei die U-förmige spiralförmige Rohrleitungsstruktur (800) spiralförmig und ringförmig in der Nähe des Umfangsrands des säulenförmigen wärmeleitfähigen Körpers (300) installiert ist, wobei der erste Fluideinlass- und -auslassanschluss (101) der U-förmigen säulenförmigen Rohrleitungsstruktur (800) jeder Leitung oben auf dem Mittelpunkt der spiralförmigen Rohrleitungsstruktur installiert ist und mit dem Boden der U-förmigen spiralförmigen Rohrleitungsstruktur (800) jeder Leitung durch das zentrale Rohrleitungssegment der U-förmigen spiralförmigen Rohrleitung (700) jeder Leitung verbunden ist und sich der Boden der U-förmigen spiralförmigen Rohrleitungsstruktur (800) in Richtung des Mittelpunkts des säulenförmigen wärmeleitfähigen Körpers (300) konzentriert und der zweite Einlass- und -auslassanschluss (102) jeder Leitung spiralförmig am oberen Ende der U-förmigen spiralförmigen Rohrleitungsstruktur (800) durch das Rohrleitungssegment (900) des zweiten Fluideinlass- und -auslassanschlusses (102) der U-förmigen spiralförmigen Rohrleitungsstruktur (800) jeder Leitung installiert ist; und wobei sich die zentralen Rohrleitungssegmente der U-förmigen spiralförmigen Rohrleitung (700) jeder Leitung in dem säulenförmigen wärmeleitfähigen Körper (300) konzentrieren
-- Wärmeisolierungsvorrichtung (400): Wobei der Umfang der konzentrierten zentralen Rohrleitungssegmente der U-förmigen spiralförmigen Rohrleitung (700) innerhalb der Wärmeisolierungsvorrichtung (400) installiert ist, derart, dass der Wärmeenergieverlust, der durch Wärmeleitung zwischen den konzentrierten zentralen Rohrleitungssegmenten der U-förmigen spiralförmigen Rohrleitung (700) und dem Rohrleitungssegment (900) verursacht wird, beträchtlich verringert wird.

## Revendications

1. Elément de tuyauterie utilisé dans un corps de stockage thermique naturel comprenant :
- un corps thermoconducteur en colonne (300) ;
- une tuyauterie en spirale en U à voies multiples, constituée d'une structure de tuyauterie en spirale en U (800) comportant au moins deux voies installées dans le corps thermoconducteur en colonne (300), la structure de tuyauterie en spirale en U (800) permettant à un fluide thermoconducteur (111) de traverser le corps thermoconducteur en colonne (300) qui se compose d'un objet semi-conducteur ou colloïdal ; la structure de tuyauterie en spirale en U (800) étant installée en spirale et en anneau près du bord périphérique du corps thermoconducteur en colonne (300), le premier terminal d'entrée et de sortie du fluide (101) de la structure de tuyauterie en spirale en U (800) de chaque voie étant installé au sommet du centre de structure de tuyauterie en spirale, et étant raccordé avec le fond de la structure de tuyauterie en spirale en U (800) de chaque voie à travers le segment de tuyauterie centrale de tuyauterie en spirale en U (700) de chaque voie, et le fond de la structure de tuyauterie en spirale en U (800) étant concentré vers le centre du corps thermoconducteur en colonne (300), et le deuxième terminal d'entrée et de sortie (102) de chaque voie étant installé à l'extrémité supérieure de la structure de tuyauterie en spirale en U (800) en spirale par le segment de tuyauterie (900) du deuxième terminal d'entrée et sortie du fluide (102) de la structure de tuyauterie en spirale en U (800) de chaque voie ; et les segments de tuyauterie centrale de la tuyauterie en spirale en U (700) de chaque voie étant concentrés dans le corps thermoconducteur en colonne (300) ;
- un dispositif d'isolation thermique (400) : la périphérie des segments de tuyauterie centrale concentrée de la tuyauterie en spirale en U (700) étant installée dans le dispositif d'isolation thermique (400), de sorte que la perte d'énergie thermique causée par la conduction thermique entre les segments de tuyauterie centrale concentrée de la tuyauterie en spirale en U (700) et le segment de tuyauterie (900) est sensiblement réduite.
